# EUROPEAN PATENT SPECIFICATION

(11) **EP 0 305 220 B1**
(45) Date of publication and mention of the grant of the patent: **11.01.1995**
(21) Application number: 88308009.5
(22) Date of filing: 30.08.1988
(51) Int. Cl.: A01B 29/04, A01B 79/00

(54) **Tillage implement**
Vorrichtung zur Bodenbearbeitung
Machine pour le travail du sol

(30) Priority: 27.08.1987 GB 8720269
(43) Date of publication of application: 01.03.1989
(73) Proprietor: Cousins, Norman, Wisbech PE14 8DE (GB)
(72) Inventor: Cousins, John, Emneth, Wisbech PE14 8DA (GB)
(74) Representative: Archer, Philip Bruce

(56) References cited:
- EP-A- 280 399
- DE-A- 2 317 969
- DE-A- 2 824 808
- DE-A- 2 912 392
- DE-C- 312 290
- GB-A- 761 217
- US-A- 2 538 167
- US-A- 3 338 315

## Description

This invention relates to a tillage implement of the kind comprising a rotary open-structured helical member which effects a crumbling and soil-stirring action as the helix engages the soil during forward motion as it rotates in work, as defined in the preamble of claim 1.

A problem which arises in the case of rotary open-structured tillage implements of this kind is that in certain soil and weather conditions they tend to plug with soil and to become less than fully effective.

The present Applicant has identified that this problem is not unconnected with the question of strength and the supporting of the implement , as follows . In the case of an implement of this kind employing a rotary helix the weight of the helix is such that where its working width is in the two metres to four metres range there is a need to provide a central shaft for support and loading purposes having a diameter of about 203 to 229 millimetres. Conventionally , such a shaft serves to support and load the helix through a series of axially spaced spiders , discs or the like , but , as will be appreciated from the above figures , the diameter of the shaftarising from the strength requirements for lifting and other purposes is such that it practically fills the hollow open centre of the helix.

Attempts have been made to meet this problem by dividing the implement into shorter sections arranged end to end , so that support means can be provided between these shorter sections , and thereby the load on the central shaft can be reduced , whereby its diameter can be correspondingly reduced. However , this solution is relatively complex and expensive and therefore not entirely satisfactory .

The present Applicant has identified a link between the diameter of the internal shaft in such implements and their tendency to become blocked during use.

There is disclosed in US-A-2538167 a roller unit having an internal transverse draft cylinder surrounded by a roller formed by a transverse row of toothed compacting rings of greater diameter than the draft cylinder and arranged edge-to-edge and loosely located on same, whereby the rings can individually float on the ground and the roller can thus conform to ground contours, from end to end thereof.

In GB-A-761217 there is disclosed a tillage implement comprising a soil compacting coil member journalled on bearings at its opposite ends.

In DE-A-2912392 there is disclosed a tillage implement in which a rotary cage rolls in contact with the soil and has a loose internal crumbler cage within it. Soil entering within the outer cage can be crushed by the inner cage. The bars of the outer cage have to be supported by spiders or end flanges.

According to the invention there is provided a tillage implement as defined in the accompanying claims.

In an embodiment, the shaft is in the form of a tube . The internal clearance between the shaft and the tillage member is preferably at least 75 millimetres .

The implement may comprise two or more such similar tillage members arranged one in front of the other.

An implement as defined above may be used together with a suction-type tillage implement , such as a subsoiler , in which the open-structured rotary tillage member acts as depth control means for the suction-type implement .

In an embodiment described below , the engagement of the shaft with the inside of the tillage member in work causes the shaft to grind the soil as the tillage member rotates and thereby the tillage member is maintained in a relatively unblocked condition.

An embodiment of the invention will now be described by way of example with reference to the accompanying drawings in which :
Fig. 1 shows a perspective view of the soil engaging portion of a tillage implement ; and
Fig. 2 shows a section through the tillage member of Fig. 1.

As shown in the drawings , a tillage implement 10 comprises a rotary open-structured tillage member 12 in the form of a helix , together with means for loading the tillage member in the form of a shaft 14 .

Shaft 14 extends through the helix 12 from end to end . At the ends there are provided retaining rings 16 , 18 fixed to shaft 14 and each provided with a stub axle 20 for journalling purposes.

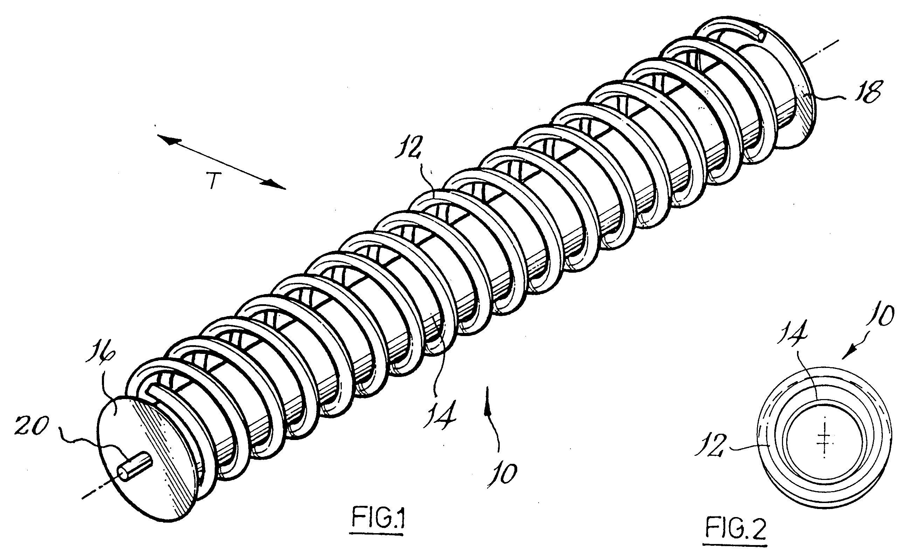

As shown in the drawings , shaft 14 is loose within the helix 12 . In other words , there is not provided any connection means for supporting the shaft within the helix , and the shaft simply rests on the helix , as shown in Fig. 2. Of course , when the implement is raised for transport , the helix will rest on the shaft .

Stub shafts 20 serve to connect the implement 10 to a suitable structure for applying draught forces. For example , the implement may be incorporated, for use in the manner of a crumbler , at the back of another agricultural implement , such as a cultivator or the like . Alternatively , several of the implements 10 could be ganged up in series , one in front of the other , to be towed as an assembly , somewhat like a land roller . Equally , the implement could be towed by means of a chain or a draw bar , or could be provided with its own implement frame whereby one or more of the helical assemblies are mounted and drawn by a tractor. The frame could be provided with hydraulically raisable and lowerable land wheels for transport purposes . A further possibility would be to provide a combination in which the helical assembly 10 is combined with a suction-type implement such as a subsoiler so that the implement 10 serves as depth control means for the subsoiler.

In use , implement 10 operates as follows. Draught forces are applied by means of shaft 14 and helix 12 rotates in the usual way to effect its tillage action by crumbling and stirring the soil . The weight of shaft 14 , together with any downwardly directed loading applied thereto cause the shaft to press against the inside surface of the helix , as shown in Fig. 2. In this way , the shaft grinds any soil which tends to enter the helix and remain there . This grinding action serves to break up the soil and expel it from the inside of the helix , thereby keeping the helix in a relatively unblocked condition .

Among the advantages provided by the embodiment described above are the fact that its operation is improved by reduction or elimination of the tendency of the helix to block . This is achieved without the hitherto-felt need to divide the helix into two or more sections , with attendant cost . It is also achieved without the need to mount the central shaft with respect to the helix in the conventional coaxial arrangement . This thereby simplifies construction and reduces cost somewhat .

Obviously , many modifications can be made within the embodiment described above. The clearance between the shaft and the helix can be from 75 miilimetres upwards . The upper limit is determined only by the distance through which the helix drops when the implement is raised for transport.

The helix can be of solid square-section rolled on the diamond to give sharp edges . It can have a varying pitch along the helix , or could be of square-sided bar , for example from 20 millimetres to 50 millimetres width . It could also be of hollow box section , or even hollow round section.

The internal shaft can be solid , or hollow as shown. Its cross-sectional shape can be round , square, or any other convenient shape. Possibly , a non-round section may improve the soil grinding action.

The implement can be employed in almost any land conditions from final tilth-finishing operations to relatively primary tillage conditions.

It is to be noted in the drawings that arrow T indicates the direction of travel . Moreover , shaft 14 need not necessarily rotate . If not , then stub shaft 20 need not be journalled in bearings. If shaft 14 does not rotate , it may have an enhanced grinding / cleaning action. It is thought likely that it will be preferred to provide for shaft 14 to rotate. Its rate of rotation is different from that of the helical tillage member due to their different diameters. This itself promotes a self-cleaning effect.

Other modifications which may be made in the above embodiment include the use of an alternative cylindrical tillage member of various forms. For example, a generally crumbler type roller having axial bars, for example a cage-type crumbler could be employed instead of the helical roll.

Two of more helical tillage members may be employed one within the other and having the same or different pitch. This combination would further inhibit plugging. A larger pitch of helix could be used when conditions are more likely to cause plugging. To increase the downward loading on the implement, the internal shaft could be made hollow and filled with water for ballast purposes.

The rotary tillage member may be axially located relative to its shaft by various means including the use of a relatively small diameter disc on the shaft, in place of the disc 16, this small disc being received in slots between inwardly projecting pairs of finger members carried by the helix at (for example) 120 degree intervals around it, there being significant radial lost motion within the slots for the disc. The disc is detachable axially from the shaft by removeable pin means for disc assembly purposes.

## Claims

1. A tillage implement (10) comprising a rotary tillage member (12) having substantial axial length compared with its radial width for direct rolling engagement with the soil, and being connected at each end to a structure for applying draft forces to the implement, said tillage member having said roller-like form defined by one or more bars which define spaces therebetween and which permit soil to enter the interior of the tillage member as defined by said bars, and a soil crushing means (14) located within said tillage member (12);
said soil crushing means (14) being loosely located within the interior of said tillage member (12) in a non co-axial relationship thereto for direct contact therewith, so as to be free to move in any direction relative thereto within the interior space of said tillage member, whereby soil entering therein is crushed as the tillage member (12) rotates;
characterised by
said rotary tillage member (12) being in the form of a helical coil, and said soil crushing means being in the form of a shaft, axle or bar (14) having a solid external surface, and known per se for supporting and loading a helical tillage member, said shaft (14) directly engaging the inside surface of said helical coil to provide bearing means therefor, and extending axially the full length of said helical coil (12) and projecting outwardly through the open ends of said coil, and being connected at each end to said structure for applying draft forces to the implement, whereby in use said shaft applies its weight directly to the helix and during transport said helix rests directly on said shaft.

2. A tillage implement according to claim 1 characterised in that the internal clearance between said shaft (14) and the tillage member (12) is at least 75 millimetres.

3. A tillage implement according to claim 1 or claim 2 characterised in that said shaft (14) is mounted for rotation.

4. A tillage implement according to any one of the preceding claims characterised in that said shaft (14) has a non-circular cross-sectional shape.

5. A tillage implement according to any one of the preceding claims characterised in that said helical coil (12) comprises polygonal section metallic stock.

## Patentansprüche

1. Bodenbearbeitungsgerät (10), das ein drehbares Bodenbearbeitungselement (12), das im Vergleich zu seiner radialen Breite von wesentlicher axialer Länge ist, für einen direkten Rolleneingriff gegenüber dem Boden umfaßt, und das an jedem Ende mit einer Konstruktion verbunden ist, mit deren Hilfe Zugkräfte auf das Gerät ausgeübt werden können, wobei das genannte Bodenbearbeitungselement die genannte, von einer oder mehreren Stangen definierte rollenähnliche Form aufweist und diese Stangen dazwischenliegende Räume definieren und diese es dem Boden ermöglichen, in das von den genannten Stangen definierte Innere des Bodenbearbeitungselementes zu gelangen, und das weiterhin ein Bodenzerkleinerungsmittel (14) umfaßt, das innerhalb des genannten Bodenbearbeitungselementes (12) angeordnet ist;
wobei das genannte Bodenzerkleinerungsmittel (14) im Innern des genannten Bodenbearbeitungselementes (12) in einem nichtkoaxialen Verhältnis dazu und für einen direkten Kontakt damit lose angeordnet ist, um sich im Verhältnis dazu in jeder Richtung innerhalb des Innenraumes des genannten Bodenbearbeitungselementes frei bewegen zu können, so daß in diesen Raum gelangender Boden während der Drehung des Bodenbearbeitungselementes (12) zerkleinert wird;
dadurch gekennzeichnet, daß
das genannte drehbare Bodenbearbeitungselement (12) die Form einer spiralförmigen Wendel aufweist und das genannte Bodenzerkleinerungsmittel in Form einer Welle, Achse oder Stange (14) mit einer massiven Außenfläche ausgebildet ist, die per se als Mittel zur Abstützung und Belastung eines spiralförmigen Bodenbearbeitungselementes bekannt sind, wobei die genannte Welle (14), die direkt in die Innenfläche der genannten spiralförmigen Wendel eingreift, um so als Lagermittel dafür zu dienen, axial über die gesamte Länge der genannten spiralförmigen Wendel (12) verläuft, nach außen durch die offenen Enden der genannten Wendel hinausragt und an jedem Ende mit der genannten Konstruktion verbunden ist, mit deren Hilfe Zugkräfte auf das Gerät ausgeübt werden können, so daß die genannte Welle während des Einsatzes ihr Gewicht direkt auf die Wendel überträgt und die genannte Wendel während der Fortbewegung direkt auf der genannten Welle ruht.

2. Bodenbearbeitungsgerät nach Anspruch 1, dadurch gekennzeichnet, daß das Innenspiel zwischen der genannten Welle (14) und dem Bodenbearbeitungselement (12) zumindest 75 mm beträgt.

3. Bodenbearbeitungsgerät nach Anspruch 1 oder Anspruch 2, dadurch gekennzeichnet, daß die genannte Welle (14) so montiert ist, daß sie eine Drehbewegung durchführen kann.

4. Bodenbearbeitungsgerät nach einem der vorstehenden Ansprüche, dadurch gekennzeichnet, daß die genannte Welle (14) eine nichtkreisförmige Querschnittsform aufweist.

5. Bodenbearbeitungsgerät nach einem der vorstehenden Ansprüche, dadurch gekennzeichnet, daß die genannte spiralförmige Wendel (12) Stangenmaterial aus Metall mit polygonalem Querschnitt umfaßt.

## Revendications

1. Un outil de labourage (10) comprenant un élément de labourage rotatif (12) ayant une longueur axiale substantielle en comparaison avec sa largeur radiale pour un contact roulant direct avec la terre, et étant relié à chaque extrémité à une structure pour appliquer des forces de traction à l'outil, ledit élément de labourage ayant ladite forme du genre d'un rouleau définie par une ou plusieurs barres qui définissent des espaces entre elles et qui permettent à la terre d'entrer à l'intérieur de l'élément de labourage comme le définissent lesdites barres, et des moyens de broyage de la terre (14) situés à l'intérieur dudit élément de labourage (12);
lesdits moyens de broyage de la terre (14) étant situés de façon flottante à l'intérieur dudit élément de labourage (12) dans une position non-coaxiale par rapport à celui-ci pour un contact direct avec celui-ci, de manière à être libre de se déplacer dans n'importe quelle direction par rapport à celui-ci à l'intérieur de l'espace intérieur dudit élément de labourage, la terre qui entre dans celui-ci étant broyée tandis que l'élément de labourage (12) tourne;
caractérisé en ce que
ledit élément de labourage rotatif (12) a la forme d'une bobine hélicoïdale, et lesdits moyens de broyage de la terre ont la forme d'un arbre, d'un essieu ou d'une barre (14) ayant une surface externe solide, et connus en soi pour supporter et charger un élément de labourage hélicoïdal, ledit arbre (14) touchant directement la surface interne de ladite bobine hélicoïdale pour fournir des moyens de support pour celle-ci, et s'étendant axialement sur toute la longueur de ladite bobine hélicoïdale (12) et se projetant vers l'extérieur à travers les extrémités ouvertes de ladite bobine, et étant relié à chaque extrémité à ladite structure pour appliquer des forces de traction à l'outil, pendant l'utilisation ledit arbre appliquant son poids directement sur l'hélice et ladite hélice reposant directement sur ledit arbre pendant le transport.

2. Un outil de labourage suivant la revendication 1, caractérisé en ce que l'espacement interne entre ledit arbre (14) et l'élément de labourage (12) est d'au moins 75 mm.

3. Un outil de labourage suivant la revendication 1 ou la revendication 2, caractérisé en ce que ledit arbre (14) est monté pour la rotation.

4. Un outil de labourage suivant l'une quelconque des revendications précédentes, caractérisé en ce que ledit arbre (14) a une forme de section transversale non-circulaire.

5. Un outil de labourage suivant l'une quelconque des revendications précédentes, caractérisé en ce que ladite bobine hélicoïdale (12) comprend une barre métallique de section polygonale.
